# EUROPÄISCHE PATENTSCHRIFT

(11) **EP 3 088 799 B1**
(45) Veröffentlichungstag und Bekanntmachung des Hinweises auf die Patenterteilung: **27.06.2018**
(21) Anmeldenummer: 16166563.3
(22) Anmeldetag: 22.04.2016
(51) Int. Cl.: F21V 5/00, F21V 14/06, G02B 7/02, F21Y 105/10, F21Y 115/10

(54) **VERSTELLBARES OPTIKSYSTEM**
ADJUSTABLE OPTICAL SYSTEM
SYSTEME OPTIQUE REGLABLE

(30) Priorität: 29.04.2015 DE 202015102145 U
(43) Veröffentlichungstag der Anmeldung: 02.11.2016
(73) Patentinhaber: Zumtobel Lighting GmbH, 6850 Dornbirn (AT)
(72) Erfinder: Schwärzler, Erich, 6941 Langenegg (AT)
(74) Vertreter: Kiwit, Benedikt

(56) Entgegenhaltungen:
- EP-A1- 1 890 076
- EP-A1- 2 860 555
- DE-A1-102006 016 376
- JP-A- 2004 119 045
- KR-B1- 101 294 210
- US-A- 4 444 471
- US-A1- 2006 268 429
- US-A1- 2009 015 388
- US-A1- 2014 168 968

## Beschreibung

Die Erfindung betrifft eine Leuchte mit einem verstellbaren Optiksystem zum Verstellen einer Optik relativ zu einem Lichtabgabebereich.

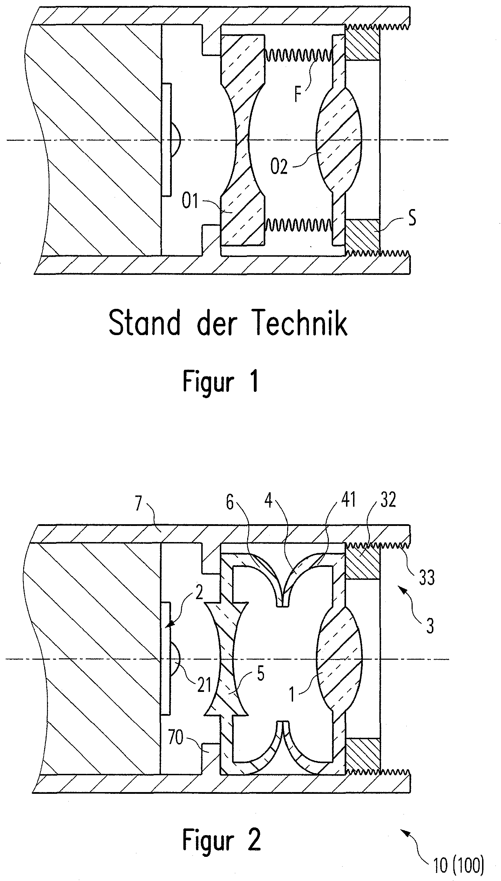

Aus dem Stand der Technik ist es bekannt, mehrere Optiken O1, O2 bspw. mittels eines zusätzlichen Federelements F (bspw. eine aus Federstahl hergestellte Feder) derart miteinander zu koppeln, dass durch eine Relativbewegung zwischen den beiden Optiken - bspw. mittels eines Stellrings S - der Abstand zwischen den beiden Optiken bzw. der Optiken bezüglich des Leuchtmittels (hier insbesondere eine LED) verändert werden kann, um somit den Lichtweg der Leuchte zu variieren (vgl. Figur 1).

Die EP 2 860 555 A1 offenbart eine einstellbare Linse aufweisend eine erste Membran, ein erstes optisches Element und das optische Element mit der Membran verbindende Federkörper.

Die US 4,444,471 offenbart ein Fokuslinsensystem aufweisend ein elastomiersches, integral geformtes, optisches Element. Über eine Montageanordung kann die axiale Position und die Form eines zentralen Linsenteils des optischen Elements in jeweiliger Korrespondenz zueinander geändert werden.

Die US 2006/268429 A1 offenbart eine Aufhängungsvorrichtung für eine autofokussierende Linsenvorrichtung. Die Aufhängungsvorrichtung weist einen Linsenhalter, eine Aufhängungsfeder und eine Auflage auf.

Es hat sich nunmehr im Stand der Technik gezeigt, dass die bekannten Systeme in ihrer Herstellung aufwendig und in ihrer Funktion beschränkt sind.

Ausgehend von dem bekannten Stand der Technik ist es nunmehr eine Aufgabe der vorliegenden Erfindung, die bisher bekannten Systeme insbesondere herstellungstechnisch und auch funktional z.B. hinsichtlich Rückstellungs-, Dicht- und Verstellungseigenschaften zu verbessern.

Diese Aufgabe wird durch den Gegenstand der unabhängigen Ansprüche gelöst. Die abhängigen Ansprüche bilden den zentralen Gedanken der Erfindung in besonders vorteilhafter Weise weiter.

Zur Lösung dieser Aufgabe betrifft die Erfindung gemäß einem ersten Aspekt erfindungsgemäß eine Leuchte mit Optiksystem, insbesondere für Strahleroptiken mit verstellbaren Lichtabstrahlwinkel und/oder für verstellbare Linsenarrays (z.B. gerader Lichtlinie und individuellen Einstellbereichen als Wallwasherfunktion), bereitgestellt, welche ein Optikelement des Optiksystems (zur Beeinflussung von Licht mittels dessen optischen Bereichs), einen Lichtabgabebereich zur Aufnahme eines Leuchtmittels, welches optisch mit dem Optikelement zusammenwirkt, ein Manipulationselement zur relativen Positionsänderung des Optikelements bezüglich des Lichtabgabebereichs, und ein Federelement aufweist, welches derart ausgebildet ist, dass es bei der relativen Positionsänderung des Optikelements eine Rückstellkraft auf das Optikelement ausübt. Die Erfindung kennzeichnet sich dadurch aus, dass das Federelement mit dem Optikelement integral ausgebildet ist. Dadurch, dass das Federelement mit dem Optikelement nun integral ausgebildet ist, kann die Anzahl der Funktionsteile und somit der Herstellungs- und Montageaufwand reduziert werden, ohne die Funktionalität, wie z.B. die Rückstellung in die ursprüngliche Optikposition, der Leuchte einzuschränken. Unter "Optiksystem" wird im Rahmen der Erfindung das oder die Vielzahl an Optikelement(en) verstanden, das bzw. die zusammen die Abstrahlcharakteristik der Leuchte bestimmen.

Das Manipulationselement ist derart ausgebildet, dass es die relative Positionsänderung des Optikelements durch eine Drehbewegung bewirkt. So wird durch die einfache Drehbewegung eine einfache relative Positionsänderung des Optikelements bereitgestellt.

Um auf einfache Weise eine gewünschte optische Wirkung zwischen Optikelement und Lichtabgabebereich zu bewirken, kann das Manipulationselement zudem derart ausgebildet sein, dass es die relative Positionsänderung des Optikelements im Wesentlichen entlang einer den Lichtabgabebereich mit dem Optikelement verbindenden Achse bewirkt. Unter einer "verbindenden Achse" wird hierin insbesondere eine die beiden Elemente bzw. Bereiche direkt verbindende Gerade verstanden (bspw. senkrecht auf den die Elemente/Bereiche aufspannenden Ebene), welche insbesondere mit einer Lichtachse bzw. optischen Achse eines vorzusehenden Leuchtmittels deckungsgleich sein kann.

Vorzugsweise ist das Manipulationselement derart ausgebildet ist, dass es die relative Positionsänderung des Optikelements zusätzlich oder alternativ im Wesentlichen quer zu einer den Lichtabgabebereich mit dem Optikelement verbindenden Achse bewirkt. Durch die Positionsänderung quer zu der den Lichtabgabebereich mit dem Optikelement verbindenden Achse wird ein weiterer/anderer Freiheitsgrad zur Verfügung gestellt, sodass eine zusätzliche optische Wirkung zwischen Optikelement und Lichtabgabebereich bewirkt werden kann; also die Abstrahlcharakteristik wahlweise eingestellt/geändert werden kann.

Das Optikelement ist derart ausgebildet (unter "ausgebildet" wird im Rahmen der Erfindung insbesondere ausgestaltet und vorgesehen verstanden), dass es durch die relative Positionsänderung bezüglich des Lichtabgabebereichs durch das Manipulationselement verkippt werden kann. Durch die Verkippung des Optikelements bezüglich des Lichtabgabebereichs kann die Abstrahlcharakteristik insbesondere bzgl. der Abstrahlrichtung wahlweise eingestellt/geändert werden.

Das Federelement kann wenisgtens mit seinem freien Ende relativ zum Lichtabgabebereich fixiert sein und/oder das dem Lichtabgabebereich zugewandte Ende des Optikelements kann im Wesentlichen punktuell relativ zum Lichtabgabebereich fixiert sein, wodurch durch eine Positionsänderung des Optikelements bezüglich des Lichtabgabebereichs eine besonders einfache Verkippung des Optikelements um den fixierten Bereich/Punkt herum als Gelenk relativ zum Lichtabgabebereich bereitgestellt wird. Unter "punktuell fixiert" wird im Rahmen der Erfindung eine Verbindung der entsprechenden Elemente verstanden, die derart ausgebildet ist, dass sie eine gelenkartige Schwenkbewegung um diesen Punkt ermöglicht.

Es ist ferner ein Übersetzungselement vorgesehen, welches derart ausgebildet ist, dass es die Drehbewegung des Manipulationselements in eine translatorische Bewegung übersetzt, sodass das Optikelement bezüglich des Lichtabgabebereichs verkippt ist.

Vorzugsweise ist das Übersetzungselement derart ausgebildet, dass es die Drehbewegung des Manipulationselements in eine translatorische Bewegung besonders vorzugsweise quer zur und/oder entlang einer den Lichtabgabebereich mit dem Optikelement verbindenden Achse übersetzen kann, sodass die relative Positionsänderung des Optikelements bezüglich des Lichtabgabebereichs erfolgen kann und das Optikelement bezüglich des Lichtabgabebereichs verkippt werden kann. Durch das Übersetzungselement wird somit eine einfache mechanische Lösung bereitgestellt, um die Drehbewegung des Manipulationselements auf eine translatorische Bewegung zur relativen Positionsänderung des Optikelements zu übersetzen.

Das Übersetzungselement kann zudem ein Exzenter sein, wodurch insbesondere ein Übersetzungselement für das Optiksystem bereitgestellt wird, welches sowohl einfach zu fertigen als auch einfach zu montieren ist.

Vorzugsweise kann das Manipulationselement auch derart ausgebildet sein, dass dessen Drehbewegung eine Schraubbewegung um eine den Lichtabgabebereich mit dem Optikelement verbindenden Achse ist. Dadurch wird ein besonders einfaches und platzsparendes Manipulationselement bereitgestellt, um das Optikelement in seiner Position zu verändern.

Ferner kann für die Leuchte ein zweites Optikelement vorgesehen sein, wobei das zweite Optikelement durch das Federelement des ersten Optikelements in einer Position relativ zum Lichtabgabebereich gehalten ist. Vorteilhaft bei dieser Ausführung ist insbesondere, dass durch das Federelement sowohl das erste Optikelement durch die Rückstellkraft in seine ursprüngliche Position zurückgestellt werden kann als auch das zweite Optikelement in seiner Position gehalten werden kann, wodurch der Montageaufwand noch weiter reduziert werden kann. Das zweite Optikelement kann alternativ oder zusätzlich auch gemäß dem ersten Optikelement ausgebildet sein, wodurch der Vorteil erzielt wird, dass durch alleinige Manipulation des ersten Optikelement sowohl die Position des ersten als auch die Position des zweiten Optikelements verändert werden kann, um z.B. eine optische Wirkung zwischen den Optikelementen und dem Lichtabgabebereich zu bewirken. Alternativ ist es auch denkbar, dass das zweite Optikelement mit seinem Federelement mit dem Federelement des ersten Optikelements derart zusammenwirkt, während das zweite Optikelement in Position relativ zum Lichtabgabebereich gehalten ist, dass die relative Positionsänderung des ersten Optikelements bezüglich des Lichtabgabebereichs über beide Federelemente erfolgen kann. Durch Zusammenwirkung der Federelemente der Optikelemente kann insbesondere bewirkt werden, dass die Federkonstante des Optiksystems verändert wird ohne die Federelemente der Optikelemente selbst zu ändern, wodurch wiederum der Herstellungs- und Montageaufwand reduziert wird.

Vorzugsweise weist das Manipulationselement einen Träger auf, an dem wenigstens eines oder mehrere der Optikelemente mittels der Federelemente federnd aufgenommen ist/sind. Ein besonders einfacher Aufbau für eine Vielzahl der erfindungsgemäßen Optiken wird dadurch bereitgestellt, um neben der Änderung der Abstrahlcharakteristik insbesondere auch durch die Federelemente einen Toleranzausgleich bezüglich der den Optikelementen zugeordneten Leuchtmittel zu bewirken.

Zur vereinfachten Herstellung des Trägers mit dem einen oder den mehreren Optikelementen und um zusätzlich Montageschritte einzusparen, kann der Träger zudem integral mit dem einen oder den mehreren Optikelementen ausgebildet sein.

Das Material des Optikelements kann ein optisches Silikon sein, wodurch neben den optischen Eigenschaften des Materials insbesondere auch die mechanischen Eigenschaften vorteilhaft für das Optiksystem, insbesondere für die Federelemente, ausgenutzt werden können.

Das Optikelement kann eine Vorsatzlinse und/oder lichtlenkende Linse sein. Darüber hinaus ist die Erfindung nicht auf ein bestimmte Art von Optik oder Linse beschränkt.
Ein Beispiel betrifft eine Leuchte mit Optiksystem, aufweisend ein Optikelement, einen Lichtabgabebereich zur Aufnahme eines Leuchtmittels, welches optisch mit dem Optikelement zusammenwirkt, ein Positionierelement zur definierten Positionierung des Optikelements, und ein Federelement, welches derart ausgebildet ist, dass es das Optikelement in der definierten Position mittels einer Rückstellkraft des Federelements am Positionierelement festlegt. Die Ausführungsform kennzeichnet sich dadurch aus, dass das Federelement mit dem Optikelement integral ausgebildet ist. Dadurch, dass das Federelement mit dem Optikelement integral ausgebildet ist, kann der Herstellungs- und Montageaufwand gering gehalten werden, da die Anzahl der Funktionsteile reduziert wird. Ferner kann durch das Federelement am Positionierelement sichergestellt werden, dass das Optikelement in der definierten Position verbaut wird, wodurch der Montageaufwand weiter reduziert werden kann. Als Positionierelement kann ein Anschlag oder eine andersartige Aufnahme (bspw. in Form eines Vorsprungs oder einer Aufnahmenut) oder auch ein verstellbares Manipulationselement dienen, wie es zuvor bereits beschreiben wurde. Im Übrigen sind auch alle bzgl. des ersten Aspekts angeführten Merkmale in gleicher Weise auch auf den zweiten Aspekt der Erfindung anwendbar.

Gemäß einem zweiten Aspekt betrifft die Erfindung ein Leuchtensystem, aufweisend eine erfindungsgemäße Leuchte mit einem Leuchtmittel (vorzugsweise LED oder LED-Modul), wobei das Leuchtmittel vorzugsweise eine Hauptabstrahlrichtung aufweist, welche besonders bevorzugt sich entlang einer Lichtachse bzw. optischen Achse erstreckt. Diese entspricht ganz besonders bevorzugt derjenigen Achse, die den Lichtabgabebereich mit dem Optikelement verbindet.
Ein Beispiel betrifft ein Optikelement, insbesondere eine Linse, für eine erfindungsgemäße Leuchte, wobei das Optikelement integral ausgebildete Federelemente aufweist, um das Optikelement in der Leuchte durch die Rückstellkraft des Federelements lagepositioniert vorzusehen. Das Federelement kann hierbei integral ausgebildete Federarme aufweisen, welche sich von einem äußeren Randbereich des Optikelements weg erstrecken.
Einige Ausführungsbeispiele der Erfindung werden nachfolgend anhand der beigefügten Zeichnungen näher erläutert. Gleiche Bezugszeichen werden für die gleichen Merkmale verwendet. Darin zeigen:
- Figur 1: eine Schnittansicht einer aus dem Stand der Technik bekannten Leuchte,
- Figur 2: eine Schnittansicht der erfindungsgemäßen Leuchte gemäß einem ersten Ausführungsbeispiel,
- Figur 3: eine Draufsicht der erfindungsgemäßen Leuchte gemäß einem zweiten Ausführungsbeispiel,
- Figur 4: eine Seitenansicht der erfindungsgemäßen Leuchte gemäß dem zweiten Ausführungsbeispiel,
- Figur 5: eine perspektivische Ansicht der erfindungsgemäßen Leuchte gemäß dem zweiten Ausführungsbeispiel,
- Figur 6: eine perspektivische Ansicht der erfindungsgemäßen Leuchte gemäß dem zweiten Ausführungsbeispiel,
- Figur 7: eine perspektivische Ansicht der erfindungsgemäßen Leuchte gemäß einem dritten Ausführungsbeispiel,
- Figur 8: eine perspektivische Detailansicht der erfindungsgemäßen Leuchte gemäß dem dritten Ausführungsbeispiel,
- Figur 9: eine perspektivische Ansicht der erfindungsgemäßen Leuchte gemäß einem vierten Ausführungsbeispiel,
- Figur 10: eine perspektivische Detailansicht der erfindungsgemäßen Leuchte gemäß dem vierten Ausführungsbeispiel, und
- Figur 11: eine Schnittansicht der erfindungsgemäßen Leuchte gemäß einem fünften Ausführungsbeispiel.

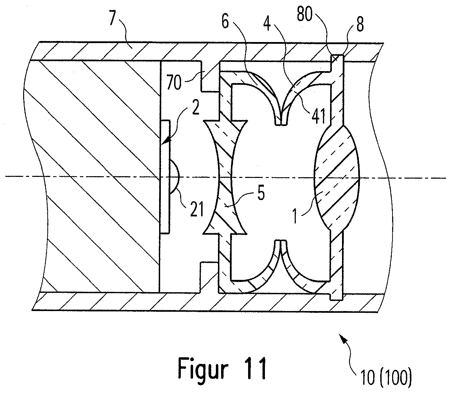

Figuren 2 und 11 zeigen beispielhafte Leuchten 10 nach bevorzugten Ausführungsbeispielen der Erfindung. Die Leuchte 10 weist ein Optikelement 1 auf. Hierbei kann es sich um jede Art von Optik handeln; insbesondere jede Art von Linsen. Die Leuchte weist ferner einen Lichtabgabebereich 2 zur Aufnahme eines Leuchtmittels 21 (bspw. LED oder LED-Modul) auf, welches optisch mit dem Optikelement 1 zusammenwirkt. Die Kombination von Leuchte 10 und Leuchtmittel 21 wird im Rahmen der Erfindung auch als Leuchtensystem 100 bezeichnet. Ferner weist die Leuchte 10 ein Federelement 4 auf, welches eine Rückstellkraft bei Manipulation des Optikelements 1 und/oder dessen Lagepositionierung an/in einem Positionierelement der Leuchte 10 ausübt. Das Optikelement 1 ist dabei integral mit dem Federelement 4 ausgebildet.

Da das Federelement 4, welches ein beliebiges bzw. beliebig gestaltetes elastisches Element sein kann, integral mit dem Optikelement 1 ausgebildet ist, kann die aus dem Stand der Technik bekannte zusätzliche Feder entfallen und somit der Herstellungs- und Montageaufwand reduziert werden. Vorzugsweise ist das Federelement 4 in Form von Federarmen 41 integral mit dem Optikelement 1 ausgebildet. Die Federarme 41 können durch Materialstärke und/oder geometrische Ausgestaltung variiert werden, um somit z.B. eine definierte Einstellung der Optikelemente 1 bei einer Manipulation derselben zu ermöglichen. Die Federarme 41 können sich dabei vom Randbereich des Optikelements 1 weg und vorzugsweise zur Symmetrieachse des Optikelements 1 hin erstrecken, sodass sich ein im Wesentlichen C-förmiger Querschnitt des mit dem Federelement 41 integral ausgebildeten Optikelements 1 ergibt. Vorteilhafterweise variiert der Querschnitt bzw. die Materialstärke der Federarme 41 mit ihrer Erstreckung, sodass die Federarme 41 z.B. mit zunehmendem Abstand zum Optikelement 1 in ihrem Querschnitt zu- oder abnehmen bzw. in ihrer Materialstärke zu- oder abnehmen. Vorteilhafterweise ist der Querschnitt an den Belastungsverlauf im Federelement 4 angepasst.

Ferner kann die Leuchte 10 bzw. das Optiksystem ein bevorzugt in Serie geschaltetes zweites Optikelement 5 aufweisen, welches gemäß dem ersten Optikelement 1 ein integral ausgebildetes Federelement 6 aufweist. Das Optikelement 5 ist vorzugsweise in einer Position relativ zum Lichtabgabebereich 2 gehalten, wobei z.B. das Optikelement 5 mit der Seite, welche zu der das Federelement 6 aufweisenden Seite abgewandt ist, auf einem Vorsprung 70 eines Gehäuseteils 7 aufliegt und das Federelement 6 des zweiten Optikelements 5 mit dem Federelement 4 des ersten Optikelements 1 zusammenwirkt und dadurch gegen den Vorsprung 70 des Gehäuseteils 7 gedrückt und somit in Position relativ zum Lichtabgabebereich 2 gehalten wird. Auch andere Aufnahmebereiche der Leuchte 10 sind denkbar. Es kann ebenso vorgesehen sein, dass das zweite Optikelement 5 nicht nur gemäß dem ersten Optikelement 1 ausgebildet, sondern auch wie dieses angeordnet/orientiert ist und somit die Seite des zweiten Optikelements 5, welche zu der das Federelement 6 aufweisenden Seite abgewandt ist, mit dem Federelement 4 des ersten Optikelements 1 zusammenwirkt - also in Anlage bzw. Wirkverbindung steht - , und das Federelement 6 auf dem Vorsprung 70 des Gehäuseteils 7 aufliegt. In diesem Fall kann das zweite Optikelement 5 seine Position relativ zum Lichtabgabebereich 2 in Abhängigkeit der relativen Positionsänderung des ersten Optikelements 1 ändern. Vorteilhafterweise kann vorgesehen sein, dass das erste Federelement 4 einerseits und das zweite Federelement 6 andererseits sich in ihrer geometrischen Ausgestaltung unterscheiden, sodass sich unterschiedliche Federkonstanten der Optikelemente 1 und 5 ergeben. In diesem Fall würden sich die Positionsänderungen der Optikelemente 1 und 5 relativ zum Lichtabgabebereich 2, bedingt durch die unterschiedlichen Federkonstanten, unterscheiden, um z.B. eine gewünschte optische Wirkung zu erzielen. Es ist darüber hinaus auch denkbar, mehr als zwei Optikelemente relativ zueinander anzuordnen bzw. in Serie zu schalten, wobei die Optikelemente in einer Position relativ zum Lichtabgabebereich 2 gehalten werden und/oder gemäß dem ersten Optikelement 1 ausgebildet sein können. Vorzugsweise können die Optikelemente ebenfalls integral miteinander ausgebildet sein.

Vorzugsweise sind die Optikelemente 1, 5 Vorsatzlinsen und/oder lichtlenkende Linsen, besonders vorzugsweise Linsen mit einer konkaven und/oder konvexen Form. Das Material der Optikelemente kann ein elastisches Material mit optischen Eigenschaften, vorzugsweise ein optisches Silikon sein. Die integral ausgebildeten Federelemente 4 und Optikelemente 1 können zusammen mit dem Optikelement 1 bevorzugt über den Urformprozess (z.B. Spritzgussverfahren) von optischen Silikonmaterialien bzw. Elastomeren hergestellt werden.

Das Optikelement 1, 5 mit den integral ausgebildeten Federelementen 4 selbst bildet einen eigenständigen erfindungsgemäßen Teil dieser Erfindung.

Die Leuchte 10 kann ferner ein Positionierelement 3, 8 zur definierten Positionierung des Optikelements 1 insbesondere bzgl. der Leuchte 10 bzw. des Lichtabgabebereichs 2 aufweisen. Ein solches Positionierelement 3, 8 kann bspw. eine Aufnahme in Form einer (umlaufenden) Nut z.B. in einem Gehäuseteil 7 der Leuchte 10 sein, in die das Optikelement 1 beispielsweise randseitig mit einem Flanschbereich 80 eingreift, und/oder ein vorbezeichneter Vorsprung 70, an dem das Optikelement 1 (randseitig flächig) anliegt, um gegen axiales herausfallen gesichert zu sein. Um das Optikelement 1 definiert zu positionieren, finden die Federelemente 4 Anwendung, welche derart ausgebildet sind - sich also bspw. derart mit ihren freien Enden bspw. in der Aufnahme oder an einem anderen Teil der Leuchte 10 abstützen - dass sie das Optikelement 1 in der definierten Position mittels einer Rückstellkraft des Federelements 4 am Positionierelement 3, 8 festlegt. Somit kann ein sicher Sitz bzw. eine sichere Lagepositionierung des Optikelements 1 gegenüber dem Positionierelement 3, 8 erzielt werden.

In einem bevorzugten Ausführungsbeispiel ist das Positionierelement derart ausgebildet, dass es eine Manipulation - also eine Bewegung(sbeeinflussung) - des Optikelements 1 insbesondere gegenüber dem Lichtabgabebereich 2 ermöglicht. Hierzu ist das Positionierelement als ein Manipulationselement 3 zur relativen Positionsänderung des Optikelements 1 bezüglich des Lichtabgabebereichs 2 ausgebildet.

Zu dieser relativen Positionsänderung weist die Leuchte 10 also, wie in Figur 2 dargestellt, bevorzugt ein Manipulationselement 3 auf, welches besonders vorzugsweise ein Stellring 32 ist. Auch andere Ausgestaltungen eines Manipulationselements sind grundsätzlich denkbar, wobei einige bevorzugte und nicht abschließende Beispiele im Rahmen der Erfindung beschrieben sind. Der Stellring 32 weist dabei ein Gewinde auf, sodass der Stellring 32 in ein entsprechendes Gewinde 33 im Gehäuseteil 7 eingeschraubt werden kann. Durch eine derartige Ausgestaltung kann die Drehbewegung des Stellrings 32 in eine Schraubbewegung übersetzt werden. Der Stellring 32 kann auf das Optikelement 1 umlaufend aufgeschraubt werden, sodass vorzugsweise der optische Bereich des Optikelements 1 durch den Stellring nicht beeinflusst wird.

Durch die Drehbewegung des Stellrings 32 kann sich somit die Position des Optikelements 1 relativ zum Lichtabgabebereich 2 ändern. Liegt das freie Ende des Federelements 4 auf einer fixierten Position relativ zum Lichtabgabereich 2 oder auf dem zweiten Optikelement 5 oder auf einer sonstigen bewegten oder unbewegten Position relativ zum Lichtabgabereich 2 auf, so übt das Federelement 4 eine Rückstellkraft auf das Optikelement 1 in Abhängigkeit der Positionsänderung durch das Manipulationselement 3, vorzugsweise durch den Stellring 32, aus. Durch die Rückstellkraft wird somit sichergestellt, dass bei einer Manipulation hin zur Ausgangsstellung das Optikelement 1 in seine ursprüngliche Position und Lage zurückgestellt werden kann, ohne z.B. aufgrund von Verschmutzungen, Toleranzunterschieden oder dergleichen eine andere als die ursprüngliche Position einzunehmen.

Für den Fall, dass das zweite Optikelement 5 vorgesehen ist, so wird bei einer Ausgestaltung des zweiten Optikelements 5 gemäß dem ersten Optikelement 1 und derselben Orientierung der beiden Optikelemente 1, 5 die Position des zweiten Optikelements 5 relativ zum Lichtabgabebereich 2 in Abhängigkeit der Drehbewegung des Stellrings 32 verändert, sodass die Rückstellkraft des Federelements 6 für das zweite Optikelement 5 dieselbe Funktion hat, wie die Rückstellkraft des Federelements 4 für das erste Optikelement 1. Für den Fall, dass das zweite Optikelement 5 in einer Position relativ zum Lichtabgabebereich 2 gehalten ist bzw. vorzugsweise das zweite Federelement 6 mit dem ersten Federelement 4 des ersten Optikelements 1 zusammenwirkt, wirkt die Kraft proportional der Ersatzfederkonstante beider Federelemente 4 und 6 als Rückstellkraft für das Optikelement 1 einserseits und als Kraft, welche das zweite Optikelement 5 in Position hält, andererseits. Die relative Positionsänderung erfolgt vorzugsweise entlang einer den Lichtabgabebereich 2 mit dem Optikelement 2 verbindenden Achse; besonders vorzugsweise entspricht die verbindende Achse der Hauptabstrahlrichtung des Leuchtmittels 21, also dessen Lichtachse bzw. optischer Achse.

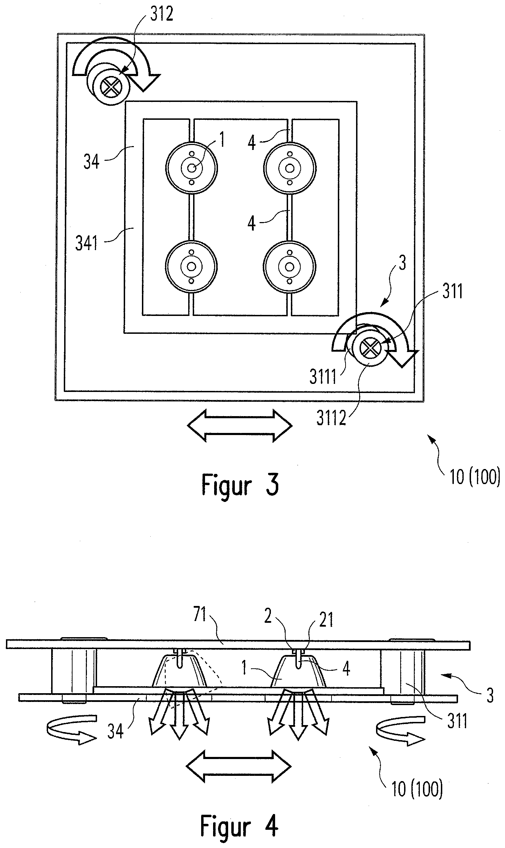

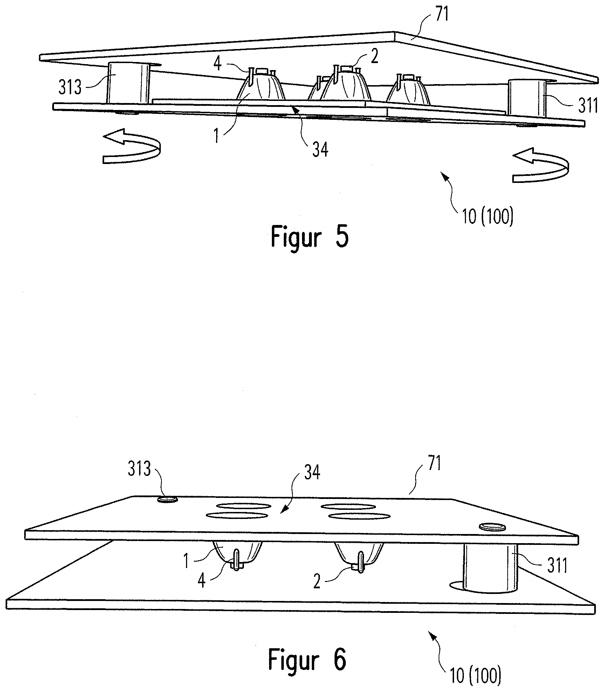

Figuren 3, 4, 5 und 6 zeigen ein zweites Ausführungsbeispiel der erfindungsgemäßen Leuchte. Vorteilhaft an dieser Ausführung ist nun, dass das Optiksystem bzw. jeder oder wenigstens ein Teil der Optikelemente 1 der Leuchte 10 einen lateralen Shift, welcher vorzugsweise eine Bewegung quer zu der den Lichtabgabebereich 2 mit dem Optikelement 1 verbindenden Achse ist, ausführen kann.

Die Leuchte 10 kann einen Träger 34 aufweisen, welcher zumindest ein Optikelement 1, vorzugsweise eine Vielzahl an Optikelementen 1 aufnehmen kann, besonders bevorzugt in Form einer Matrix-, Raster- oder Cluster-Anordnung wie bspw. einer Vorsatzcluster-Anordnung. Darüber hinaus ist es auch denkbar, dass der Träger 34 mit der Vielzahl an Optikelementen 1 integral ausgebildet ist, wodurch Herstellungs- und Montageaufwand weiter reduziert werden können. Der Träger 34 kann parallel zu einem Gehäuseteil 71 angeordnet sein welcher den Lichtabgabebereich 2 aufweist, wobei vorzugsweise jedem der Optikelemente 1 ein Leuchtmittel 21 zugeordnet ist.

Die Optikelemente 1 sind dabei vorzugsweise mit dem freien Ende der Federelemente 4 mit dem Träger 34 verbunden, so dass eine Manipulation des Trägers 34 die vorbezeichnete Rückstellkraft der Federelemente 4 bewirkt. Hierzu ist das Optikelement 1 bevorzugt mit seiner/seinem dem Lichtabgabebereich 2 zugewandten Seite/Ende des Optikelements 1 im Wesentlichen punktuell relativ zum Lichtabgabebereich 2 fixiert. Diese punktuelle Fixierung des Optikelements 1 dient als gelenkige Befestigung des Optikelements 1 gegenüber dem Lichtabgabebereich 2, um die das Optikelement 1 schwenkbar vorgesehen ist.

Hierzu kann ein Teil des Federelements 4 (bspw. ein weiterer Federarm) das zugeordnete Optikelement 1 mit seinem freien Ende relativ zum Lichtabgabebereich 2 gelenkig fixieren. Vorzugsweise kann dieser Teil der integral ausgebildeten Feder 4 auf Seiten des Lichteintrittsbereichs 2 des Optikelements 1 vorgesehen sein, welcher dem Leuchtmittel 21 zugeordnet ist.

Der Träger 34 ist vorzugsweise quer zu der den Lichtabgabebereich 2 mit dem Optikelement 1 verbindenden Achse besonders vorzugsweise in einer Ebene parallel zum Gehäuseteil 71 translatorisch bewegbar/verfahrbar. Über ein Übersetzungselement kann die Drehbewegung des Manipulationselements 31 in die translatorische Bewegung des Trägers 34 übersetzt werden. Vorteihafterweise ist das Übersetzungselement ein Exzenter 311, wobei ein erster Teil 3111 des Exzenters 311 drehbar im Gehäuseteil 71 vorgesehen ist und ein zweiter Teil 3112 des Exzenters 311 drehbar und mit einem vom ersten Teil des Ezenters 311 abweichenden Drehpunkt im Träger 34 vorgesehen ist, sodass sich bei Drehbewegung des Exzenters 311 sich der Träger 34 translatorisch bewegen kann. Gegenüber der den Exzenter 311 aufweisenden Seite des Trägers 34 kann zudem ein gemäß dem Exzenter 311 ausgestalteter zweiter Exzenter 312 vorgesehen sein. Durch Drehung des Manipulationselements 3 bzw. der Exzenter 311 und 312 kann dann der Träger 34 und somit die Optikelemente 1 im Wesentlichen quer zu der den Lichtabgabebereich 20 mit dem Optikelement 1 verbindenden Achse, welche vorzugsweise der Hauptabstrahlrichtung des Leuchtmittels 21 entspricht, in ihrer Position bzw. Ausrichtung relativ zum Lichtabgabebereich 2 verändert werden, um z.B. eine bestimmte optische Wirkung zu erzielen. Die Rückstellkraft des Federelements 4 bzw. der Federelemente 4 stellt/stellen auch hier sicher, dass das Optikelement 1 bzw. die Vielzahl an Optikelementen 1 wieder in seine/ihre ursprüngliche Position zurückgestellt werden kann/können. Die federnde Aufhängung der Optikelemente 1 in dem Träger 34 alleine kann auch schon bewirken, dass bei Vorsehen des Optiksystems in einer Leuchte 10 ein Toleranzausgleich der einzelnen Optikelemente 1 zu dem zugehörigen Lichtabgabeberiech 2, insbesondere zu dem zugehörigen Leuchtmittel, bereitgestellt wird.

Für den Fall, dass das Optikelement 1 bspw. über ein freies Ende eines der Federelemente 4 relativ zum Lichtabgabebereich 2, vorzugsweise am Gehäuseteil 71, fixiert ist, kann durch die translatorische Bewegung des Trägers 34 quer zu der den Lichtabgabebereich 2 mit dem Optikelement 1 verbindenden Achse, das Optikelement 1 verkippt - also um den Fixierpunkt geschwenkt - werden, um z.B. eine weitere optische Wirkung zu erzielen. Auch hier ist durch die Rückstellkraft des Federelements 4, welche zusätzlich auch entgegen der Verkippung wirken kann, gewährleistet, dass die Optikelemente 1 wieder in ihre ursprüngliche Position zurückgestellt werden können.

Der Träger 34 kann auch in eine andere Richtung als die quer zu der den Lichtabgabebereich 2 mit dem Optikelement 1 verbindenden Achse verfahren werden. So kann ebenfalls vorgesehen sein, dass der Träger 34 zusätzlich oder alternativ entlang der den Lichtabgabebereich 2 mit dem Optikelement 1 verbindenden Achse verfahren werden kann. Es ist somit zudem auch denkbar mehrere Träger 34 mit Optikelementen 1 in Serie, vorzugsweise gemäß dem ersten Ausführungsbeispiel in Figur 2, vorzusehen.

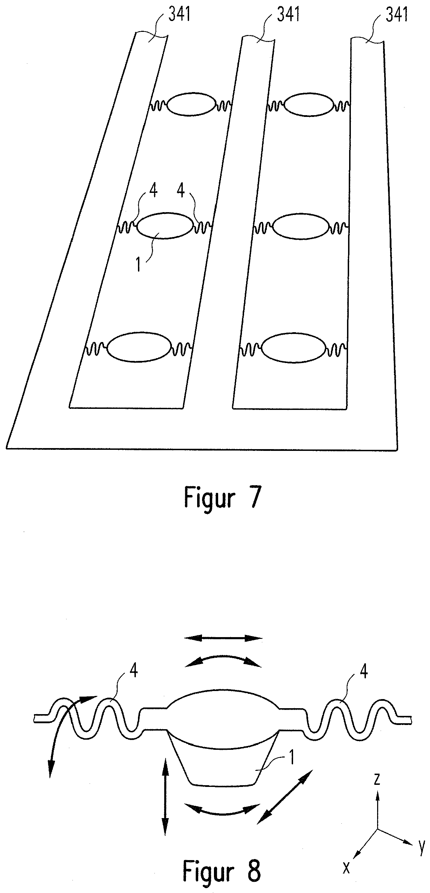

Figuren 7 und 8 zeigen ein drittes Ausführungsbeispiel der erfindungsgemäßen Leuchte 10. Wenigstens eines oder mehrere der Optikelemente 1 ist/sind dabei federnd an dem Träger 34 aufgenommen. Vorzugsweise weist das Trägerelement 34 Rippen bzw. einen Rahmen 341 auf, wobei die Optikelemente 1 zwischen den Rippen 341 angeordnet sind und mittels der freien Enden der Federelemente 4 die Optikelemente 1 mit den Rippen 341 verbunden sind. Die Federelemente 4 sind vorzugsweise derart gestaltet, dass die Rückstellkraft in Richtung aller denkbaren Freiheitsgrade wirken kann (also entlang und um jede Raumachse X, Y, Z; insbesondere in Richtung der Federarme 4). Dies wird bevorzugt durch die geometrische Ausgestaltung des Federelements 4 in Form einer Feder, Spirale, Schlange oder Welle. Bei diesem Ausführungsbeispiel ist es zudem auch vorteilhaft möglich, die einzelnen Optikelemente 1 bspw. individuell in ihrer Ausrichtung bezüglich des Leuchtmittels 21 zu manipulieren.

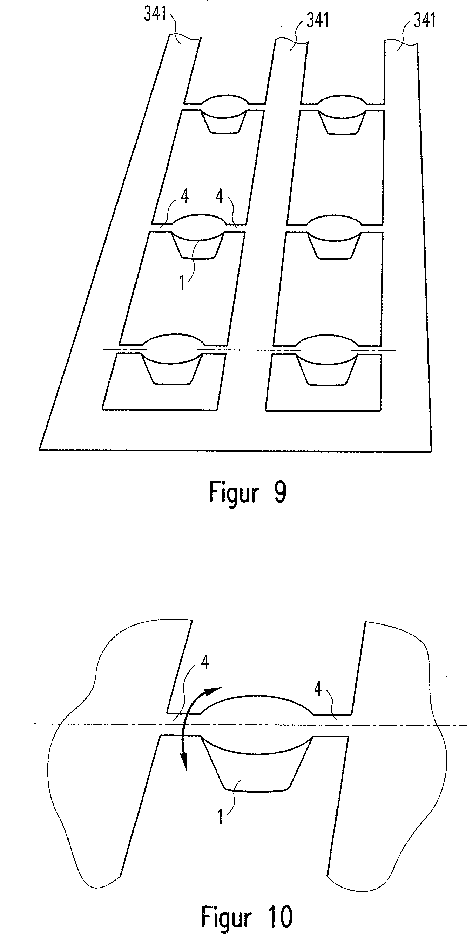

Figuren 9 und 10 zeigen ein viertes Ausführungsbeispiel der erfindungsgemäßen Leuchte 10, wobei sich dieses Ausführungsbeispiel gegenüber dem dritten Ausführungsbeispiel dahingehend unterscheidet, dass die Federarme 4 stegartig ausgebildet sind und die Optikelemente 1 somit insbesondere verkippt werden können und die Rückstellkraft der Federelemente 4 entgegen der Verkippung wirkt. Dieses Ausführungsbeispiel zeigt im Wesentlichen einen Träger 34 mit Optikelementen 1 gemäß dem zweiten Ausführungsbeispiel der Figuren 3 bis 6, wobei in letzterem jedoch mehrere Optikelemente 1 zwischen zwei Rippen 341 vorgesehen sind, welche jeweils über ihre Federelemente 4 - also die freien Enden derselben - miteinander gekoppelt sind.

Die Träger 34 des dritten und vierten Ausführungsbeispiels können ebenso in der Leuchte 10 gemäß dem zweiten Ausführungsbeispiel eingesetzt werden. Auch können unterschiedlich ausgestaltete Träger 34 in einer Leuchte 10 eingesetzt werden. Je nach Ausgestaltung der Leuchte 10 kann auch der Träger 34 beliebig angepasst sein. Er ist beispielsweise nicht auf eine rechteckige oder quadratische Rahmenform beschränkt.

Ein weiterer Vorteil der vorliegenden Erfindung ist zudem, dass mittels des integral ausgebildeten Federelementes 4 ein Toleranzausgleich der Optikelemente 1 bezüglich des Leuchtmittels 21 ermöglicht wird. Dies ist insbesondere vorteilhaft bei einer Cluster-Anordnung, in der zahlreiche Optikelemente 1 bereitgestellt sind, die sich auf Grund der federnden Funktion vorzugsweise individuell bezüglich des ihnen zugeordneten Leuchtmittels 21 ausrichten.

Die Erfindung ist nicht auf die zuvor beschriebenen Ausführungsbeispiele beschränkt, solange sie von dem Gegenstand der folgenden Ansprüche umfasst ist. Alle vorstehend beschriebenen Merkmale oder in den Figuren gezeigten Merkmale sind im Rahmen der Erfindung beliebig vorteilhaft miteinander kombinierbar. Die Erfindung ist insbesondere nicht auf die geometrischen Ausgestaltungsbeispiele der Optikelemente, Federelemente, Träger, Leuchte(ngehäuse), Manipulationselement, Positionierelemente beschränkt.

## Patentansprüche

1. Leuchte (10) mit Optiksystem, aufweisend:
- ein Optikelement (1),
- einen Lichtabgabebereich (2) zur Aufnahme eines Leuchtmittels (21), welches optisch mit dem Optikelement (1) zusammenwirkt,
- ein Manipulationselement (3) zur relativen Positionsänderung des Optikelements (1) bezüglich des Lichtabgabebereichs (2), und
- ein Federelement (4), welches derart ausgebildet ist, dass es bei der relativen Positionsänderung des Optikelements (1) eine Rückstellkraft auf das Optikelement (1) ausübt, wobei
das Federelement (4) mit dem Optikelement (1) integral ausgebildet ist, wobei
das Manipulationselement (3) derart ausgebildet ist, dass es die relative Positionsänderung des Optikelements (1) durch eine Drehbewegung bewirkt, wobei
das Optikelement (1) derart ausgebildet ist, dass es durch die relative Positionsänderung bezüglich des Lichtabgabebereichs (2) durch das Manipulationselement (3) verkippt werden kann, und wobei
ferner ein Übersetzungselement vorgesehen ist, welches derart ausgebildet ist, um die Drehbewegung des Manipulationselements (3) in eine translatorische Bewegung zu übersetzen, sodass das Optikelement (1) bezüglich des Lichtabgabebereichs (2) verkippt ist.

2. Leuchte (10) nach Anspruch 1,
**dadurch gekennzeichnet, dass**
das Manipulationselement (3) derart ausgebildet ist, dass es die relative Positionsänderung des Optikelements (1) entlang einer den Lichtabgabebereich (2) mit dem Optikelement (1) verbindenden Achse bewirkt.

3. Leuchte (10) nach Anspruch 1 oder 2,
**dadurch gekennzeichnet, dass**
das Manipulationselement (3) derart ausgebildet ist, dass es die relative Positionsänderung des Optikelements (1) quer zu einer den Lichtabgabebereich (2) mit dem Optikelement (1) verbindenden Achse bewirkt.

4. Leuchte (10) nach einem der vorangehenden Ansprüche,
**dadurch gekennzeichnet, dass**
das Federelement (4) relativ zum Lichtabgabebereich (2) fixiert ist und/oder das dem Lichtabgabebereich (2) zugewandte Ende des Optikelements (1) kann im Wesentlichen punktuell relativ zum Lichtabgabebereich (2) fixiert sein.

5. Leuchte (10) nach einem der vorangehenden Ansprüche,
**dadurch gekennzeichnet, dass**
das Übersetzungselement derart ausgebildet ist, um die Drehbewegung des Manipulationselements (3) in eine translatorische Bewegung vorzugsweise quer zur und/oder entlang einer den Lichtabgabebereich mit dem Optikelement (1) verbindenden Achse zu übersetzen, sodass die relative Positionsänderung des Optikelements (1) bezüglich des Lichtabgabebereichs (2) erfolgt und das Optikelement (1) bezüglich des Lichtabgabebereichs (2) verkippt ist.

6. Leuchte (10) nach einem der vorangehenden Ansprüche,
**dadurch gekennzeichnet, dass**
das Übersetzungselement ein Exzenter (311, 312) ist.

7. Leuchte (10) nach einem der vorangehenden Ansprüche,
**dadurch gekennzeichnet, dass**
das Manipulationselement (3) derart ausgebildet ist, dass dessen Drehbewegung eine Schraubbewegung um eine den Lichtabgabebereich (2) mit dem Optikelement (1) verbindenden Achse ist,
wobei vorzugsweise ferner ein zweites Optikelement (5) vorgesehen ist, wobei das zweite Optikelement (5) durch das Federelement (4) des ersten Optikelements (1) in einer Position relativ zum Lichtabgabebereich (2) gehalten ist und/oder gemäß dem ersten Optikelement (1) ausgebildet ist, und
wobei das zweite Optikelement (5) vorzugsweise ein zweites Federelement (6) aufweist, welches mit dem Federelement (4) des ersten Optikelements (1) zusammenwirkt, wobei bevorzugt das zweite Optikelement (5) in Position relativ zum Lichtabgabebereich gehalten ist und die relative Positionsänderung des ersten Optikelements (1) bezüglich des Lichtabgabebereichs (2) erfolgen kann.

8. Leuchte (10) nach einem der vorangehenden Ansprüche,
**dadurch gekennzeichnet, dass**
das Manipulationselement (3) einen Träger (34) aufweist, an dem wenigstens eines oder mehrere der Optikelemente (1) mittels der Federelemente (4) federnd aufgenommen ist/sind,
wobei der Träger (34) vorzugsweise integral mit dem einen oder den mehreren Optikelementen ausgebildet ist.

9. Leuchte (10) nach einem der vorangehenden Ansprüche,
**dadurch gekennzeichnet, dass**
das Material des Optikelements (1) ein optisches Silikon ist

10. Leuchte (10) mit Optiksystem nach einem der vorangehenden Ansprüche,
**dadurch gekennzeichnet, dass**
das Optikelement (1) eine Vorsatzlinsen und/oder lichtlenkende Linse ist.

11. Leuchtensystem (100), aufweisend
eine Leuchte (10) gemäß einem der vorangehenden Ansprüche,
**dadurch gekennzeichnet, dass**
der Lichtabgabebereich (2) der Leuchte ein Leuchtmittel (21), vorzugsweise eine LED, aufweist.

12. Leuchtensystem (100) nach Anspruch 11,
**dadurch gekennzeichnet, dass**
das Leuchtmittel (21) eine Hauptabstrahlrichtung aufweist, die sich entlang einer Lichtachse erstreckt, welche vorzugsweise der Achse entspricht, die den Lichtabgabebereich (2) mit dem Optikelement (1) verbindet.

## Claims

1. A luminaire (10) with an optical system, having:
- an optical element (1),
- a light emission area (2) for accommodating an illuminant (21), which interacts optically with the optical element (1),
- a manipulation element (3) for the relative position change of the optical element (1) with regard to the light emission area (2), and
- a spring element (4), which is designed in such a manner that it exercises a resetting force on the optical element (1) during the relative position change of the optical element (1), wherein
the spring element (4) is integrally formed with the optical element (1), wherein the manipulation element (3) is designed in such a manner that it produces the relative position change of the optical element (1) by a rotational movement, wherein
the optical element (1) is designed in such a manner that it can be tilted by the relative position change with regard to the light emission area (2) by the manipulation element (3), and wherein
a translation element is also provided, which is designed, so as to translate the rotational movement of the manipulation element (3) into a translational movement , so that the optical element (1) is tilted with regard to the light emission area (2).

2. A luminaire (10) according to Claim 1,
**characterized in**
**that** the manipulation element (3) is designed in such a manner that it produces a relative position change of the optical element (1) along an axis connecting the light emission area (2) with the optical element (1).

3. A luminaire (10) according to Claim 1 or 2,
**characterized in that**
the manipulation element (3) is designed in such a manner that it produces the relative position change of the optical element transversely to an axis connecting the light emission area (2) to the optical element (1).

4. A luminaire (10) according to any one of the preceding claims,
**characterized in that**
the spring element (4) is fixed relative to the light emission area (2) and/or the end of the optical element (1) facing the light emission area (2) can be fixed substantially selectively relative to the light emission area (2).

5. A luminaire (10) according to any one of the preceding claims,
**characterized in that**
the translation element is designed in such a manner in order to translate the rotational movement of the manipulation element (3) into a translational movement preferably transversely to and/or along an axis connecting the light emission area to the optical element (1), so that the relative position change of the optical element (1) occurs with regard to the light emission area (2) and the optical element (1) is tilted with regard to the light emission area (2).

6. A luminaire (10) according to any one of the preceding claims,
**characterized in that**
the translation element is an eccentric (311, 312).

7. A luminaire (10) according to any one of the preceding claims,
**characterized in that**
the manipulation element (3) is designed in such a manner that its rotational movement is a screw movement about an axis connecting the light emission area (2) to the optical element (1),
wherein preferably a second optical element (5) is also provided, wherein the second optical element (5) is held by the spring element (4) of the first optical element (1) in a position relative to the light emission area (2) and/or is designed according to the first optical element (1), and
wherein the second optical element (5) preferably has a second spring element (6), which interacts with the spring element (4) of the first optical element (1), wherein preferably the second optical element (5) is held in position relative to the light emission area and the relative position change of the first optical element (1) can occur with regard to the light emission area (2).

8. A luminaire (10) according to any one of the preceding claims,
**characterized in that**
the manipulation element (3) has a carrier (34), on which at least one or several of the optical elements (1) is/are resiliently accommodated by means of the spring elements (4),
wherein the carrier (34) is preferably integrally formed with the one or the several optical elements.

9. A luminaire (10) according to any one of the preceding claims,
**characterized in that**
the material of the optical element (1) is an optical silicone.

10. A luminaire (10) with an optical system according to any one of the preceding claims,
**characterized in that**
the optical element (1) is an ancillary lens and/or a light-directing lens.

11. A lighting system (100), having
a luminaire (10) according to any one of the preceding claims,
**characterized in that**
the light emission area (2) of the luminaire has an illuminant (21), preferably a LED.

12. A lighting system (100) according to claim 11,
**characterized in that**
the illuminant (21) has a main emission direction, which extends along a light axis, which preferably corresponds to the axis, which connects the light emission area (2) to the optical element (1).

## Revendications

1. Luminaire (10) avec système optique, comprenant :
- un élément optique (1),
- une partie d'émission de lumière (2) pour le logement d'un moyen d'éclairage (21), qui interagit de manière optique avec l'élément optique (1),
- un élément de manipulation (3) pour le changement de la position relative de l'élément optique (1) par rapport à la partie d'émission de lumière (2) et
- un élément à ressort (4), qui est conçu de façon à ce que, lors du changement de position relative de l'élément optique (1), il applique à l'élément optique (1) une force de rappel
l'élément à ressort (4) étant réalisé de manière intégrale avec l'élément optique (1),
l'élément de manipulation (3) étant conçu de façon à provoquer le changement de position relative de l'élément optique (1) par un mouvement de rotation,
l'élément optique (1) étant conçu de façon à ce qu'il puisse être basculé par l'élément de manipulation (3) du fait du changement de position relative par rapport à la partie d'émission de lumière (2) et
un élément de conversion étant en outre prévu, qui est conçu de façon à convertir le mouvement de rotation de l'élément de manipulation (3) en un mouvement de translation, de façon à ce que l'élément optique (1) soit basculé par rapport à la partie d'émission de lumière (2).

2. Luminaire (10) selon la revendication 1,
**caractérisé en ce que**
l'élément de manipulation (3) est conçu de façon à ce qu'il provoque le changement de position relative de l'élément optique (1) le long d'un axe reliant la partie d'émission de lumière (2) avec l'élément optique (1).

3. Luminaire (10) selon la revendication 1 ou 2,
**caractérisé en ce que**
l'élément de manipulation (3) est conçu de façon à ce qu'il provoque le changement de position relative de l'élément optique (1) transversalement par rapport à un axe reliant la partie d'émission de lumière (2) avec l'élément optique (1).

4. Luminaire (10) selon l'une des revendications précédentes,
**caractérisé en ce que**
l'élément à ressort (4) est fixé par rapport à la partie d'émission de lumière (2) et/ou l'extrémité, opposée à la partie d'émission de lumière (2), de l'élément optique (1) peut être fixée de manière globalement ponctuelle par rapport à la partie d'émission de lumière (2).

5. Luminaire (10) selon l'une des revendications précédentes,
**caractérisé en ce que**
l'élément de conversion est conçu, afin de convertir le mouvement de rotation de l'élément de manipulation (3) en un mouvement de translation de préférence transversal par rapport et/ou le long d'un axe reliant la partie d'émission de lumière avec l'élément optique (1), de façon à ce que le changement de position relative de l'élément option (1) ait lieu par rapport à la partie d'émission de lumière (2) et que l'élément optique (1) soit basculé par rapport à la partie d'émission de lumière (2).

6. Luminaire (10) selon l'une des revendications précédentes,
**caractérisé en ce que**
l'élément de conversion est un excentrique (311, 312).

7. Luminaire (10) selon l'une des revendications précédentes,
**caractérisé en ce que**
l'élément de manipulation (3) est conçu de façon à ce que son mouvement de rotation est un mouvement de vissage autour d'un axe reliant la partie d'émission de lumière (2) avec l'élément optique (1),
de préférence en outre, un deuxième élément optique (5) étant prévu, le deuxième élément optique (5) étant maintenu par l'élément à ressort (4) du premier élément optique (1) dans une position par rapport à la partie d'émission de lumière (2) et/ou selon le premier élément optique (1) et
le deuxième élément optique (5) comprenant de préférence un deuxième élément à ressort (6) qui interagit avec l'élément à ressort (4) du premier élément optique (1), de préférence le deuxième élément optique (5) étant maintenu en position par rapport à la partie d'émission de lumière et le changement de position relative du premier élément optique (1) pouvant avoir lieu par rapport à la partie d'émission de lumière (2).

8. Luminaire (10) selon l'une des revendications précédentes,
**caractérisé en ce que**
l'élément de manipulation (3) comprend un support (34), sur lequel au moins un ou plusieurs éléments optiques (1) sont logés de manière élastique au moyen des éléments à ressorts (4),
le support (34) étant de préférence réalisé de manière intégrale avec le ou les éléments optiques.

9. Luminaire (10) selon l'une des revendications précédentes,
**caractérisé en ce que**
le matériau de l'élément optique (1) est un silicone optique.

10. Luminaire (10) selon l'une des revendications précédentes,
**caractérisé en ce que**
l'élément optique (1) est une lentille de conversion et/ou une lentille de guidage de lumière.

11. Système de luminaire (100) comprenant
un luminaire (10) selon l'une des revendications précédentes,
**caractérisé en ce que**
la partie d'émission de lumière (2) du luminaire comprend un moyen d'éclairage (21), de préférence une LED.

12. Système de luminaire (100) selon la revendication 11,
**caractérisé en ce que**
le moyen d'éclairage (21) comprend une direction d'émission principale qui s'étend le long d'un axe lumineux, qui correspond de préférence à l'axe qui relie la partie d'émission de lumière (2) avec l'élément optique (1).
